# EUROPEAN PATENT APPLICATION

(11) **EP 2 500 530 A1**
(43) Date of publication of application: **19.09.2012**
(21) Application number: 10829792.0
(22) Date of filing: 30.09.2010
(51) Int. Cl.: F01K 25/10, F01D 15/10, F01K 23/10, F02G 5/00, F02G 5/04

(54) **ENGINE WASTE HEAT RECOVERY POWER-GENERATING TURBO SYSTEM AND RECIPROCATING ENGINE SYSTEM PROVIDED THEREWITH**

(30) Priority: 13.11.2009 JP 2009259888
(71) Applicant: Mitsubishi Heavy Industries, Ltd., Tokyo 108-8215 (JP)
(72) Inventor: HIGASHIMORI, Hirotaka, Tokyo 108-8215 (JP); OSAFUNE, Shinnosuke, Tokyo 108-8215 (JP)
(74) Representative: Henkel, Breuer & Partner
(86) International application number: PCT/JP2010/067074
(87) International publication number: WO 2011/058832

(57) **Abstract**

Provided is an engine waste heat recovery power-generating turbo system suitable for practical use, which recovers, in the form of electricity, energy discarded from an engine. Specifically, provided is an engine waste heat recovery power-generating turbo system (1) which generates electricity by using waste heat available in a reciprocating engine (3) comprising: a jacket cooling water circulatory system (9); and an exhaust passage (15) which exhausts high-temperature combustion gas in the form of exhaust gas. The engine waste heat recovery power-generating turbo system (1) is provided with a medium circuit (27) and a power generator (29). While using a low-boiling medium the critical temperature of which is about 80 - 200 °C, the medium circuit (27) forms a closed-loop Rankine cycle by means of: an evaporator unit (33); a turbine (35) which expands the low-boiling medium; a condenser (37); and a turbo pump (39) which causes the low-boiling medium to rise in pressure. The power generator (29) is coaxially coupled to the turbine (35), and generates electricity by being driven to rotate by the turbine (35) which rotates with the expansion of the low-boiling medium. The evaporator unit (33) is provided with an exhaust gas heat exchanger (45) which evaporates the low-boiling medium by at least causing heat exchange between the exhaust gas and the low-boiling medium.

## Description

### {Technical Field}

The present invention relates to an engine-waste-heat-recovery power generating turbo system and a reciprocating engine provided with the same.

### {Background Art}

A reciprocating engine takes in fuel, such as gasoline, alcohol, gas (natural gas, petroleum gas, etc.), and so forth, into a combustion chamber in a cylinder so as to have an appropriate mixing ratio with air, compresses it, and ignites it with an electrical spark to cause an explosion (rapid combustion). The reciprocating engine causes a piston to reciprocate in the cylinder by using the force of this explosion, converts the reciprocation of the piston into continuous rotation by using a connecting rod and a crankshaft, and outputs motive force (shaft motive force) from the crankshaft.

Because the area surrounding the combustion chamber of the cylinder reaches a high temperature, it is cooled by cooling means. As the cooling means, for example, a jacket-cooling-water circulation system is often employed, in which a double-structured space known as a jacket is formed around the cylinder, through which cooling liquid (for example, water, also referred to as jacket cooling water) is made to pass, and thus, overheating in the area surrounded by the cylinder is suppressed.
Reciprocating engines include reciprocating engines for traveling that are installed in traveling objects, such as automobiles, etc., and stationary reciprocating engines that are employed in a fixed state in power plants, etc.

In a reciprocating engine, effective work in the form of the shaft motive force is generated by a portion of energy due to combustion of fuel, and the remainder is externally discarded as loss.
For example, in a 100 kW-class reciprocating engine, of the heat energy obtained by combustion, the actual energy that can be utilized as the shaft motive force is generally about 30%, and this is expressed as the thermal efficiency. Of the other energy which is lost, about 10% is accounted for by pump loss, such as frictional loss, about 30% is accounted for by cooling loss for cooling the engine to a certain temperature, and about 30% is accounted for by exhaust loss, which is the heat carried outside by the exhaust.

With regard to the stationary reciprocating engine, a system has been developed in which the shaft motive force is utilized at a maximum level, and, of the exhaust energy, pressure is recovered with a turbocharger and heat energy is recovered by means of, for example, heat utilization, such as producing hot water, etc.; and there have been efforts to improve the total efficiency of stationary reciprocating engines, including this recovered energy.
In a stationary reciprocating engine, a large, expensive cooling tower is provided in order to cool the jacket cooling water.

On the other hand, with vehicular reciprocating engines, although radiators for cooling the jacket cooling water are comparatively small and low cost, the energy that can be actually utilized on average (average efficiency) remains at several percent due to variations in the operating rotational speed and load, as well as losses inside vehicule equipment. A so-called hybrid engine is a system invented to reduce this load fluctuation and to increase the average efficiency. A hybrid engine is a system in which the load fluctuation in the engine is reduced and, at the time of low load, the motive force for generating power and driving is generated by using the shaft motive force, which increases the utilization efficiency of the shaft motive force. The pressure of exhaust energy is also recovered with a turbocharger.

With respect to vehicular reciprocating engines, as disclosed in, for example, Patent Literature 1, there is a known waste-heat recovery device that recovers waste heat generated in association with driving of an engine by utilizing the Rankine cycle.
This is a device in which the jacket-cooling-water circulation system is formed as a sealed structure; a turbine is driven with gasified cooling water, i.e., steam, heated with the waste heat from the engine; and the heat energy possessed by the steam is recovered by being converted to electrical energy, etc.

### {Citation List}

### {Patent Literature}

{PTL 1} Japanese Unexamined Patent Application, Publication No. 2008-169760.

### {Summary of Invention}

### {Technical Problem}

With the disclosure in Patent Literature 1, the jacket cooling water, that is to say, water, is turned into steam with the heat of exhaust gas. Because the adiabatic heat drop for water is large, the turbine needs to be rotated at a high speed.
When a high-speed compatible turbine is employed, there is a problem in that, because of restrictions on practical rotational speed, the diameter of the turbine itself increases, resulting in an increased size. When the turbine rotational speed is set for high-speed rotation, a generator for the electrical energy conversion must have such a frequency so high that it cannot be provided for practical use with current technology. Alternatively, when a practical generator is employed, a gear with a large reduction ratio is required for the turbine. In such a case, there are associated difficulties of electrical and mechanical natures in achieving practical use, such as, the need to apply a seal to the rotation shaft in order to prevent the steam from leaking into the generator and gear portions.
Furthermore, because what circulates in the circulation system is water vapor, there is a problem in that, in the case in which the seal cannot provide complete sealing against the steam, water leaks into the generator and gears, thus causing short circuits in electric circuits, turbidity in the lubricant, etc. Furthermore, because the requirements for pressure, temperature, etc. of steam needed to maintain the necessary efficiency are increased in this turbine, a bypath channel is provided and a plurality of open/close valves are provided, thus making the jacket-cooling-water circulation system complex.
The current situation is such that practical use has not yet been achieved due to these factors.

The present invention has been conceived in light of the above-described circumstances, and an object thereof is to provide a practical engine-waste-heat-recovery power generating turbo system that recovers energy discarded from an engine as electrical power and a reciprocating engine provided with the same.

### {Solution to Problem}

In order to solve the above-described problems, the present invention employs the following solutions.
Specifically, a first aspect of the present invention is an engine-waste-heat-recovery power generating turbo system that generates power by using waste heat from a reciprocating engine which has a jacket-cooling-water circulation system for cooling inside an engine jacket and an exhaust-gas channel for exhausting high-temperature combustion gas as exhaust gas, the engine-waste-heat-recovery power generating turbo system including a medium circuit that forms a closed-loop Rankine cycle, in which low-boiling-point medium whose critical temperature is from about 80 °C to about 200 °C is used, with an evaporator that converts the low-boiling-point medium to a gas phase, a turbine that expands the low-boiling-point medium, which has been converted to the gas phase at the evaporator, to convert the low-boiling-point medium to low-pressure gas phase, a condenser that cools the low-pressure-boiling-point medium to convert the low-boiling-point medium to a liquid phase, and a compressor that pressurizes the low-boiling-point medium sent from the condenser; and a generator that is coaxially connected to the turbine and that generates power by being rotationally driven by the turbine, which is rotated in association with an expansion of the low-boiling-point medium, wherein the evaporator is provided with a first heat exchanger that performs heat exchange at least between the exhaust gas and the low-boiling-point medium to convert the low-boiling-point medium to the gas phase.

In the medium circuit that forms the closed-loop Rankine cycle, the low-boiling-point medium sequentially circulates through the compressor, the evaporator, the turbine, and the condenser. The compressor pressurizes the low-boiling-point medium from a state in which it is in a low-pressure, low-temperature, liquid phase to a state in which it is in a high-pressure liquid phase. Subsequently, the evaporator increases the temperature of the low-boiling-point medium, thus causing it to be in a state in which it is in a high-pressure, high-temperature gas phase. The low-boiling-point medium in this state is introduced to the turbine to be expanded, thus being converted to a low-pressure gas phase. The low-boiling-point medium converted to the low-pressure gas phase is cooled at the condenser, thus being converted to the low-pressure, low-temperature liquid phase. The expanding low-boiling-point medium performs work, thereby rotating the turbine, and thus, the generator is driven to generate power.
In addition, because the evaporator is provided with the first heat exchanger that performs heat exchange between the exhaust gas and the low-boiling-point medium to convert the low-boiling-point medium to the gas phase, the temperature of the low-boiling-point medium is increased by the exhaust gas that passes through the exhaust-gas channel. In other words, the low-boiling-point medium that circulates in the medium circuit can recover heat from the exhaust gas discarded from the reciprocating engine (exhaust loss). Because the recovered energy is converted to electrical power, the waste heat from the reciprocating engine can be converted to highly versatile electricity.

At this time, because the critical temperature of the low-boiling-point medium is from about 80 °C to about 200 °C, sufficient gas-phase pressure, temperature, etc. that are necessary to maintain a required turbine efficiency can be obtained even with comparatively low-temperature exhaust gas. Because the adiabatic heat drop for the low-boiling-point medium is reduced, the turbine can be rotated at low speed. Accordingly, it is possible to prevent an increase in the turbine size.
Because the medium circuit is provided separately from the jacket-cooling-water circulation system and the exhaust channel, in other words, provided separately and independently of the reciprocating engine, it is possible to prevent the jacket-cooling-water circulation system, the exhaust channel, etc. from becoming complex.
Accordingly, it is possible to provide a practical engine-waste-heat-recovery power generating turbo system that can be installed in, for example, a small space in a vehicle, etc., without greatly affecting the reciprocating engine.

In the first aspect of the present invention, the evaporator may be provided with, on an upstream side of the first heat exchanger, a second heat exchanger that performs heat exchange between the low-boiling-point medium and jacket cooling water on a high-temperature side of the jacket-cooling-water circulation system to heat the low-boiling-point medium.

At the evaporator, the low-boiling-point medium undergoes heat exchange on the upstream side of the first heat exchanger with the jacket cooling water on the high-temperature side of the jacket-cooling-water circulation system by means of the second heat exchanger, thus increasing the temperature thereof; therefore, the jacket cooling water is cooled, and, on the other hand, the low-boiling-point medium can recover heat from the jacket cooling water. In this way, it is possible to eliminate the need to externally release the heat to cool the jacket cooling water (cooling loss) or to considerably reduce the amount thereof. On the other hand, because the low-boiling-point medium recovers the heat, which has conventionally been externally released, by means of the second heat exchanger, thereby making it possible to generate power with it, the efficiency of the reciprocating engine can be improved even more.
Because the jacket cooling water is generally from 80 to 85 °C, liquid-liquid heat exchange occurs with the low-boiling-point medium whose critical temperature is from about 80 °C to about 200 °C. Accordingly, a comparatively small liquid-liquid heat exchanger can be employed as the second heat exchanger.

In the first aspect of the present invention, the reciprocating engine may be provided with a turbocharger that compresses and supplies air; and the evaporator may be provided with, on the upstream side of the first heat exchanger, a third heat exchanger that performs heat exchange between the low-boiling-point medium and outlet air of the turbocharger to heat the low-boiling-point medium.

Because the outlet air from the turbocharger is compressed, the temperature thereof is increased. Because the density is decreased when the temperature is increased, there are systems in which the heat is externally released, and the outlet air is cooled and supplied to the cylinders to supply a greater amount of air to the cylinders.
At the evaporator, because the temperature of the low-boiling-point medium is increased by undergoing heat exchange at the upstream side of the first heat exchanger with the outlet air from the turbocharger by means of the third heat exchanger, the outlet air is cooled, and, on the other hand, the low-boiling-point medium can recover heat from the outlet air. Accordingly, because it is possible to eliminate the need to externally release the heat to cool the outlet air and because power can be generated, on the other hand, by recovering the heat energy thereof, the efficiency of the reciprocating engine can be improved.

With the above-described configuration, the third heat exchanger may be provided in series on an upstream side or a downstream side of the second heat exchanger.
Furthermore, with the above-described configuration, the third heat exchanger may be provided in parallel with the second heat exchanger.

With the first aspect of the present invention, it is preferable that the compressor be a turbo pump; that the turbo pump be coaxially connected to the generator; and that the turbine, the generator, and the turbo pump be accommodated in a sealed container.

In this way, because the turbo pump is coaxially connected with the generator, the turbine, the generator, and the turbo pump are integrated. Because this integrated unit of the turbine, the generator, and the turbo pump is accommodated in the sealed container, it is not necessary to provide a seal between the turbine and the external air nor between the turbo pump and the external air. In addition, by sealing up these three components, including the generator, in a combined form, it is possible to reliably prevent the low-boiling-point medium from leaking.

A second aspect of the present invention is a reciprocating engine system including a reciprocating engine which has a jacket-cooling-water circulation system for cooling inside an engine jacket and an exhaust gas channel for exhausting high-temperature combustion gas as exhaust gas; and an engine-waste-heat-recovery power generating turbo system according to any one of Claims 1 to 6.

With the second aspect of the present invention, because heat can be recovered at least from the exhaust gas from the reciprocating engine, as described above, and because the engine-waste-heat-recovery power generating turbo system that converts the recovered energy to electrical power is provided, the efficiency of the reciprocating engine can be improved.

### {Advantageous Effects of Invention}

With the present invention, because the evaporator is provided with the first heat exchanger that performs heat exchange at least between the exhaust gas and the low-boiling-point medium to convert the low-boiling-point medium to the gas phase, heat can be recovered from the exhaust gas discarded from the reciprocating engine. Because the recovered energy is converted to electrical power, the waste heat from the reciprocating engine can be converted to highly versatile electricity.
At this time, because the critical temperature of the low-boiling-point medium is from about 80 °C to about 200 °C, it is possible to prevent an increase in size of the turbine, and it is possible to prevent the jacket-cooling-water circulation system, the exhaust-channel, etc. from becoming complex.
Accordingly, it is possible to provide a practical engine-waste-heat-recovery power generating turbo system that can be installed in, for example, a small space in a vehicle, etc., without greatly affecting the reciprocating engine.

### {Brief Description of Drawings}

Fig. 1 is a block diagram showing, in outline, the configuration of a reciprocating engine system according to a first embodiment of the present invention.
Fig. 2 is a block diagram showing, in outline, the configuration of a reciprocating engine system according to a second embodiment of the present invention.
Fig. 3 is a block diagram showing, in outline, the configuration of a reciprocating engine system according to a third embodiment of the present invention.
Fig. 4 is a block diagram showing, in outline, the configuration of another embodiment of the reciprocating engine system according to the third embodiment of the present invention.
Fig. 5 is a block diagram showing, in outline, the configuration of another embodiment of the reciprocating engine system according to the third embodiment of the present invention.
Fig. 6 is a block diagram showing, in outline, the configuration of a reciprocating engine system according to a fourth embodiment of the present invention.

### {Description of Embodiments}

Embodiments of the present invention will be described in detail below by using the attached drawings.

### {First Embodiment}

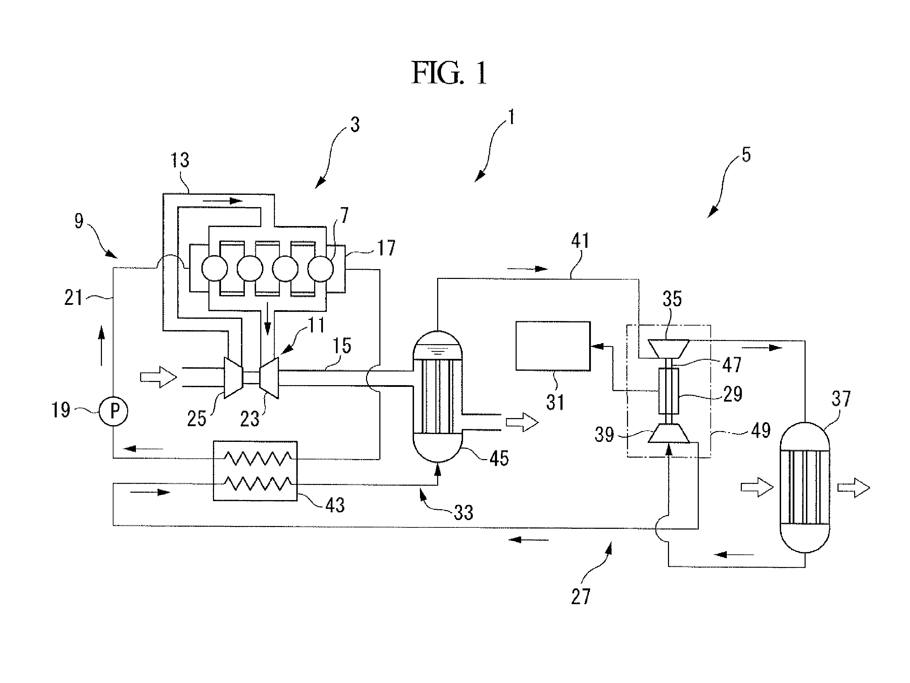

A reciprocating engine system 1 according to a first embodiment of the present invention will be described below with reference to Fig. 1.

Fig. 1 is a block diagram showing, in outline, the configuration of the reciprocating engine system 1 according to the first embodiment.

The reciprocating engine system 1 is provided with a reciprocating engine 3 and an engine-waste-heat-recovery power generating turbo system 5.
The reciprocating engine 3 is provided with a plurality of cylinders 7 where fuel, such as gasoline, alcohol, gas (natural gas, petroleum gas, etc.), or the like, and air are taken in so as to be in an appropriate mixing ratio, compressed, and ignited, for example, with an electrical spark, to cause an explosion (rapid combustion); a jacket-cooling-water circulation system 9 that cools the area surrounding the combustion chambers of the cylinders 7; and a turbocharger 11 that increases the amount of air taken into the cylinders 7 by compressing the air taken thereinto.

The cylinders 7 are provided with an intake channel 13 through which the air is taken in and an exhaust channel (exhaust-gas channel) 15 through which combustion gas combusted in the cylinders 7 is expelled as exhaust gas.
The jacket-cooling-water circulation system 9 is provided with a jacket (engine jacket) 17 that forms double-structured spaces at the cylinders 7, in particular, around the combustion chambers thereof, a cooling water pump 19 that circulates the jacket cooling water, and a jacket-water circulation channel 21 that circulates the jacket cooling water by connecting the jacket 17, the cooling water pump 19, and the jacket 17.

The turbocharger 11 is mainly formed of a turbine 23 that is disposed in the exhaust channel 15 and that is rotationally driven by the exhaust gas from the cylinders 7 and a compressor 25 that is coaxially connected with the turbine 23 and that compresses the air passing through the intake channel 13 by being rotationally driven with the rotation of the turbine 23.
A cooling member that cools the air passing through the intake channel 13 may be provided in the intake channel 13, between the compressor 25 and the cylinders 7.

The engine-waste-heat-recovery power generating turbo system 5 is provided with a medium circuit 27 in which low-boiling-point medium circulates to form a closed-loop Rankine cycle, a generator 31, and a battery 33.
Here, the low-boiling-point medium refers to, for example, a chlorofluorocarbon substitute, examples of which include HFC134a and HFE7100. The low-boiling-point medium is not limited to these, and any medium may be employed so long as the critical temperature thereof is from about 80 °C to about 200 °C. For example, the critical temperature of HFC134a is 101.2 °C, and the critical temperature of HFE7100 is 195.8 °C.

The medium circuit 27 is provided with an evaporator 33 that converts the low-boiling-point medium to a gas phase, a turbine 35 that expands the low-boiling-point medium that has been converted to the gas phase at the evaporator 33 to convert it to a low-pressure gas phase; a condenser 37 that cools the low-pressure-boiling-point medium from the turbine 35 to convert it to a liquid phase; a turbo pump (compressor) 39 that pressurizes the low-boiling-point medium sent from the condenser 37; and a medium channel 41 that connects these devices to circulate the low-boiling-point medium therein.

The evaporator 33 is provided with a jacket-cooling-water heat exchanger (second heat exchanger) 43 that performs heat exchange between the jacket cooling water on a high-temperature side of the jacket-water circulation channel 21 and the low-boiling-point medium, as well as an exhaust-gas heat exchanger (first heat exchanger) 45 that performs heat exchange between the exhaust gas that passes through the exhaust channel 15 and the low-boiling-point medium.
The jacket-cooling-water heat exchanger 43 is disposed on the upstream side of the exhaust-gas heat exchanger 45. Jacket cooling water of, for example, 80 to 85 °C is supplied to the high-temperature side of the jacket-cooling-water heat exchanger 43, and, on the low-temperature side thereof, liquid-phase, high-pressure low-boiling-point medium of, for example, about 40 °C is supplied with a countercurrent system.

The jacket cooling water is cooled by the low-boiling-point medium by a few degrees, for example, 2 to 3 °C, at an outlet of the jacket-cooling-water heat exchanger 43. On the other hand, the low-boing-point medium is heated by the jacket cooling water, and the temperature thereof is increased to, for example, about 75 °C at the outlet of the jacket-cooling-water heat exchanger 43. In other words, the low-boiling-point medium can recover heat from the jacket cooling water.
Because the critical temperature of the low-boiling-point medium is from about 80 °C to about 200 °C, liquid-liquid heat exchange occurs between the low-boiling-point medium and the jacket cooling water. A liquid-liquid heat exchanger, which can be made comparatively small, can be employed as the jacket-cooling-water heat exchanger 43. Furthermore, because the jacket-cooling-water heat exchanger 43 is a heat exchanger of a high-efficiency countercurrent system, the size thereof can be reduced further.

On the high-temperature side of the exhaust-gas heat exchanger 45, heating exhaust gas is supplied, and, on the low-temperature side thereof, the liquid-phase, high-pressure low-boiling-point medium of, for example, about 75 °C is supplied with the countercurrent system (or a concurrent system).
The temperature of the low-boiling-point medium is increased by the exhaust gas that passes through the exhaust-gas channel, thus being converted to the gas phase. In other words, the low-boiling-point medium can recover heat from the exhaust gas discarded from the cylinders 7.

The turbine 35 adiabatically expands the low-boiling-point medium that has been converted to the high-pressure, high-temperature gas phase at the evaporator 33, thus converting it to a low-pressure gas phase. At this time, the turbine 35 obtains work from expansion of the low-boiling-point medium and is rotated.
The turbine 35 is provided with a main shaft 47.

The generator 29 is integrated with the turbine 35 by being coaxially connected thereto via the main shaft 47. The generator 29 is rotated by the rotation of the turbine 35 transmitted thereto via the main shaft 47 to generate power. For example, a synchronous generator or an induction generator is employed as the generator 29, and the main shaft 47 serves as the rotation shaft of a rotor in the generator 29.
The rotational speed of the generator 29 corresponds to the exhaust heat and temperature due to the engine load, and the flow volume and pressure can be changed by controlling the rotational speed.
The electric power from the power generation at the generator 29 charges the battery 31. Instead of charging the battery 31, the electric power may be directly supplied to devices that require it.

The condenser 37 is a heat exchanger that cools the low-pressure-boiling-point medium from the turbine 35, thereby converting it to the liquid phase. On the high-temperature side of the condenser 37, the low-boiling-point medium of, for example, 80 °C is supplied, and, on the low-temperature side thereof, cooling air of, for example, about 20 °C is supplied as cooling medium with the concurrent system.
The low-boiling-point medium is cooled to, for example, about 40 °C by the cooling air. On the other hand, the cooling air is heated by the low-boiling-point medium, and the temperature thereof is increased to, for example, about 50 °C at the outlet of the condenser 37.
Without limitation to gas such as air, liquid, such as water, can be employed as the cooling medium.

The turbo pump 39 is coaxially connected with the turbine 35 and the generator 29 via the main shaft 47. The turbo pump 39 is rotated by the rotation of the turbine 35 transmitted thereto via the main shaft 47 and pressurizes the liquid-phase low-boiling-point medium introduced thereto from the condenser 37 by compressing it.

The turbine 35, the generator 29, and the turbo pump 39 are integrated by being connected by the main shaft 47.
This integrated unit of the turbine 35, the generator 29, and the turbo pump 39 is accommodated in a container (sealed container) 49, which is sealed, so as to be isolated from the external air.
Because the turbine 35, the generator 29, and the turbo pump 39 are accommodated in the container 49 and are isolated from the external air in this way, it is not necessary to provide seals between the turbine 35 and the external air as well as between the turbo pump 39 and the external air. In addition, by sealing up these three components, including the generator 29, in a combined form, it is possible to reliably prevent the low-boiling-point medium from leaking. Therefore, the frequency of maintenance, such as exchanging sealing parts and replenishing working fluid, can be considerably reduced, and thus, the maintenance costs can be reduced.

The integrated unit of the turbine 35, the generator 29, and the turbo pump 39 is vertically disposed so that the main shaft 47 extends in a perpendicular direction and the turbo pump 39 is positioned at the bottom-most position.
By doing so, the size of the equipment can be reduced, and the installation space can be made small.
Furthermore, if imparted with a gas-liquid sealing function, a thrust bearing of the turbo pump 39 that supports the main shaft 47 can stably prevent the liquid-phase low-boiling-point medium from moving toward the generator 29 and the turbine 35.

The operation of the reciprocating engine system 1 according to this embodiment, configured as above, will now be described.
When the reciprocating engine 3 is started up, the exhaust gas from the cylinders 7 rotates the turbine 23. Together with this rotation of the turbine 23, the compressor 25 is rotationally driven to compress the air that is taken thereinto and to supply it to the cylinders 7 via the intake channel 13. At the outlet of the compressor 25, the temperature of the compressed air is increased to, for example, about 180 °C.

The air from the intake channel 13 and the separately supplied fuel are taken into the cylinders 7 through the motion of the pistons so as to achieve an appropriate mixing ratio. The air and fuel that are taken thereinto are compressed and exploded (rapidly combusted). The combusted combustion gas is expelled from the exhaust channel 15 as exhaust gas.
The reciprocating engine 1 causes reciprocating motion of the pistons in the cylinders with the force of this explosion, also converts this reciprocating motion of the pistons to continuous rotation with connecting rods and the crankshaft, and outputs the motive force (shaft motive force) from the crankshaft.

At this time, at the jacket-cooling-water circulation system 9, the jacket cooling water is made to circulate in the jacket-water circulation channel 21 by the cooling water pump 19. When passing through the jacket 17, the jacket cooling water obtains heat from the area surrounding the combustion chambers of the cylinders 7 and the temperature thereof is increased to, for example, 80 to 85 °C. On the other hand, because the heat in the area that surrounds the combustion chambers of the cylinders 7 is taken away, they are cooled.

The jacket cooling water undergoes heat exchange with the low-temperature, low-boiling-point medium flowing in the medium channel 41 by means of the jacket-cooling-water heat exchanger 43 to be cooled by, for example, a few degrees, and is then circulated to the jacket 17. Because the jacket cooling water is cooled by the low-boiling-point medium that circulates in the medium channel 41 in this way, it is possible to eliminate the need to externally release the heat to cool the jacket cooling water (cooling loss).
Although the jacket cooling water is cooled at the jacket-cooling-water heat exchanger 43 only with the low-boiling-point medium in this embodiment, it is not limited thereto; for example, a conventional radiator may be provided in combination. By doing so, the degree of freedom in controlling the reciprocating engine 3 can be increased, in particular, at startup, at halting, and during partial-load operation.

Next, the operation of the engine-waste-heat-recovery power generating turbo system 5 will be described.
The low-boiling-point medium that circulates in the medium channel 41 undergoes changes as follows. The low-temperature (about 40 °C), low-pressure, liquid-phase low-boiling-point medium introduced from the condenser 37 is compressed at the turbo pump 39, which is rotated by the rotation of the turbine 35, thus being pressurized.

The pressurized low-temperature, high-pressure low-boiling-point medium is introduced to the jacket-cooling-water heat exchanger 43 in the evaporator 33 and is heated therein by the jacket cooling water, thus increasing the temperature thereof to, for example, about 75 °C at the outlet of the jacket-cooling-water heat exchanger 43. The low-boiling-point medium is kept in the liquid phase.
Next, the low-boiling-point medium is introduced to the exhaust-gas heat exchanger 45 in the evaporator 33, and the temperature thereof is increased by the exhaust gas of, for example, about 400 °C, which passes through the exhaust channel 15, thus being converted to the gas phase. In other words, heat from the exhaust gas discarded from the cylinder 7 can be recovered with the low-boiling-point medium. Accordingly, it is possible to reduce the heat externally discarded as exhaust gas (exhaust loss).

The low-boiling-point medium that has been converted to the high-pressure, high-temperature gas phase at the evaporator 33 is introduced to the turbine 35 and is adiabatically expanded to be in the high-temperature, high-pressure gas phase or in a wet state in which a portion thereof is in the liquid phase. At this time, the temperature of the low-boiling-point medium is, for example, about 80 °C.
Because the turbine 35 is rotated by obtaining work from the expansion of the low-boiling-point medium, the main shaft 47 is rotated.
The generator 29 is rotated by the rotation of the turbine 35 transmitted thereto via the main shaft 47, thus generating power. The electric power generated by the generator 29 charges the battery 31.

In this way, the low-boiling-point medium can recover heat from the jacket cooling water at the jacket-cooling-water heat exchanger 43 and can recover heat from the exhaust gas discarded from the reciprocating engine 3 at the exhaust gas heat exchanger 45. Because the recovered heat (energy) is converted to electrical power by the generator 29, the waste heat from the reciprocating engine 3 can be converted to highly versatile electricity.
Because of these, the efficiency of the reciprocating engine 3 can be improved considerably.

At this time, because the critical temperature of the low-boiling-point medium is from about 80 °C to about 200 °C, liquid-liquid heat exchange can be employed at the jacket-cooling-water heat exchanger 43, and, at the exhaust-gas heat exchanger 45, sufficient gas-phase pressure, temperature, etc. that are necessary to maintain a required turbine efficiency can be obtained even with comparatively low-temperature exhaust gas. In other words, efficient heat exchange can individually be performed at the jacket-cooling-water heat exchanger 43 and the exhaust-gas heat exchanger 45. Because the adiabatic heat drop for the low-boiling-point medium is reduced, the turbine can be rotated at low speed. Accordingly, it is possible to prevent an increase in the turbine size.

Because the medium circuit 27 is provided separately from the jacket-cooling-water circulation system 9 and the exhaust channel 15, in other words, provided separately and independently of the reciprocating engine 3, it is possible to prevent the jacket-cooling-water circulation system 9, the exhaust channel 15, etc. from becoming complex.
Accordingly, it is possible to provide a practical engine-waste-heat-recovery power generating turbo system 5 that can be installed in, for example, a small space in a vehicle, etc., without greatly affecting the reciprocating engine 3.

### {Second Embodiment}

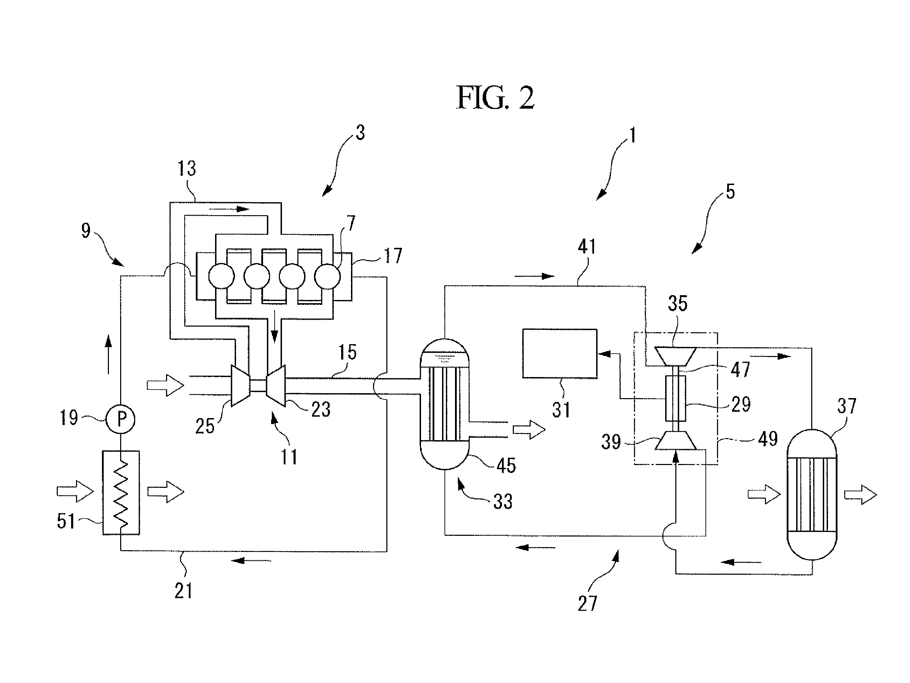

Next, a reciprocating engine system 1 according to a second embodiment of the present invention will be described by using Fig. 2.
Because the configurations of the evaporator 33 and the jacket-cooling-water circulation system 9 in the engine-waste-heat-recovery power generating turbo system 5 of this embodiment differ from those in the first embodiment, the different portions will mainly be described herein, and redundant descriptions will be omitted for the portions that are the same as those in the first embodiment.
Note that the same members as those in the first embodiment are given the same reference signs.

Fig. 2 is a block diagram showing, in outline, the configuration of the reciprocating engine system 1 according to this embodiment.
The evaporator 33 of this embodiment is formed only with the exhaust-gas heat exchanger 45. Because of this, the jacket-cooling-water circulation system 9 is provided with a radiator 51 for cooling the jacket cooling water whose temperature is increased by the cylinders 7. A cooling tower may be employed instead of the radiator 51.

Because the operation of the thus-configured reciprocating engine system 1 according to this embodiment is basically the same as that of the above-described first embodiment, redundant descriptions will be omitted, and only different portions will be described.
In the jacket-cooling-water circulation system 9, the jacket cooling water that is circulated by the cooling water pump 19 cools the area surrounding the combustion chambers of the cylinders 7 when passing through the jacket 17 and, at that time, the temperature thereof is increased by obtaining heat from the area that surrounds the combustion chambers of the cylinders 7.
The jacket cooling water is cooled at the radiator 51 through heat exchange with the cooling air and is then circulated to the jacket 17.

In the engine-waste-heat-recovery power generating turbo system 5, the low-temperature, high-pressure low-boiling-point medium sent from the turbo pump 39 is introduced to the exhaust-gas heat exchanger 45 in the evaporator 33. The temperature of the low-boiling-point medium is increased by the exhaust gas of, for example, about 400 °C passing through the exhaust channel 15, thus being converted to a high-temperature, high-pressure gas phase. In other words, because heat from the exhaust gas discarded from the cylinders 7 can be recovered with the low-boiling-point medium, it is possible to reduce the heat externally discarded as exhaust gas (exhaust loss).

In this way, because the recovered heat (energy) is converted to electrical power by the generator 29, the waste heat from the reciprocating engine 3 can be converted to highly versatile electricity.
At this time, because the critical temperature of the low-boiling-point medium is from about 80 °C to about 200 °C, at the exhaust-gas heat exchanger 45, sufficient gas-phase pressure, temperature, etc. that are necessary to maintain a required turbine efficiency can be obtained even with comparatively low-temperature exhaust gas. Because the adiabatic heat drop for the low-boiling-point medium is reduced, the turbine can be rotated at low speed. Accordingly, it is possible to prevent an increase in the turbine size.

Because the medium circuit 27 is provided separately from the jacket-cooling-water circulation system 9 and the exhaust channel 15, in other words, provided separately and independently of the reciprocating engine 3, it is possible to prevent the jacket-cooling-water circulation system 9, the exhaust channel 15, etc. from becoming complex.
Accordingly, it is possible to provide a practical engine-waste-heat-recovery power generating turbo system 5 that can be installed in, for example, a small space in a vehicle, etc., without greatly affecting the reciprocating engine 3.

Without limitation to the reciprocating engine 3, the engine-waste-heat-recovery power generating turbo system 5 of this embodiment can be applied to systems in which a sufficient heat source can be ensured for the exhaust-gas heat exchanger 45 by means of a boiler, a gas turbine, etc.

### {Third Embodiment}

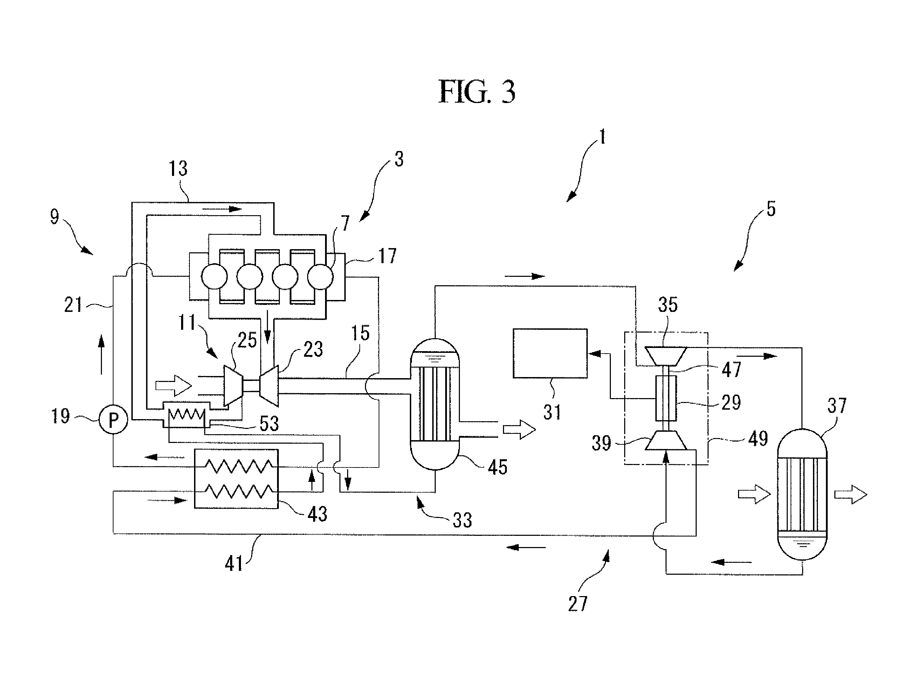

Next, a reciprocating engine system 1 according to a third embodiment of the present invention will be described by using Fig. 3.
Because the configurations of the evaporator 33 and the intake channel 13 in the engine-waste-heat-recovery power generating turbo system 5 of this embodiment differ from those in the first embodiment, the different portions will mainly be described herein, and redundant descriptions will be omitted for the portions that are the same as those in the first embodiment.
Note that the same members as those in the first embodiment are given the same reference signs.

Fig. 3 is a block diagram showing, in outline, the configuration of the reciprocating engine system 1 according to this embodiment.
In this embodiment, an intake-air heat exchanger (third heat exchanger) 53 is provided between a blower 25 at the intake channel 13 and the cylinders 7.
In the intake-air heat exchanger 53, a medium channel 41 is inserted at a position between the jacket-cooling-water heat exchanger 43 and the exhaust-heat heat exchanger 45 and is attached thereto. The intake-air heat exchanger 53 is a heat exchanger that performs heat exchange between air (intake air) at the outlet of the turbocharger 11 (outlet of the compressor 25) and the low-boiling-point medium.

The evaporator 33 is formed of a heat exchanger in which the jacket-cooling-water heat exchanger 43, the intake-air heat exchanger 53, and the exhaust-gas heat exchanger 45 are connected in series in this order. Therefore, the intake-air heat exchanger 53 is provided on the upstream side of the exhaust-gas heat exchanger 45.
The intake-air heat exchanger 53 forms a portion of the intake channel 13, and air compressed by the blower, thus having a comparatively high temperature of, for example, about 180 °C, flows in the interior thereof. The low-boiling-point medium of, for example, about 75 °C, that has flowed out from the jacket-cooling-water heat exchanger 43 is supplied to the medium channel 41, which is inserted inside the intake-air heat exchanger 53 and is attached thereto, with the countercurrent system relative to the intake air.
The intake air is cooled by the low-boiling-point medium, and, on the other hand, the low-boiling-point medium is heated by the intake air. In other words, the low-boiling-point medium can recover heat from the intake air.

Because the operation of the thus-configured reciprocating engine system 1 according to this embodiment is basically the same as that of the above-described first embodiment, redundant descriptions will be omitted, and only different portions will be described.
Because the intake air, which is the outlet air from the turbocharger 11, is compressed, the temperature thereof is increased. Because this intake air is cooled by the low-boiling-point medium at the intake-air heat exchanger 53, the temperature thereof is decreased, thus making it possible to increase the density thereof. Accordingly, the amount of air supplied to the cylinders can be increased further.

In the engine-waste-heat-recovery power generating turbo system 5, the low-boiling-point medium that has exited the jacket-cooling-water heat exchanger 43 is introduced to the intake-air heat exchanger 53. The temperature of the low-boiling-point medium is increased by the intake air that passes through the intake-air heat exchanger 53. In other words, because the low-boiling-point medium can recover the heat from the intake air, it is possible to eliminate the need to externally release the heat to cool the intake air.
Therefore, at the evaporator 33, heat discarded from the reciprocating engine 3 can also be recovered at the intake-air heat exchanger 53 in addition to the jacket-cooling-water heat exchanger 43 and the exhaust-gas heat exchanger 45.
Because the heat (energy) recovered in this way is converted to electrical power by the generator 29, the waste heat from the reciprocating engine 3 can be converted to highly versatile electricity.

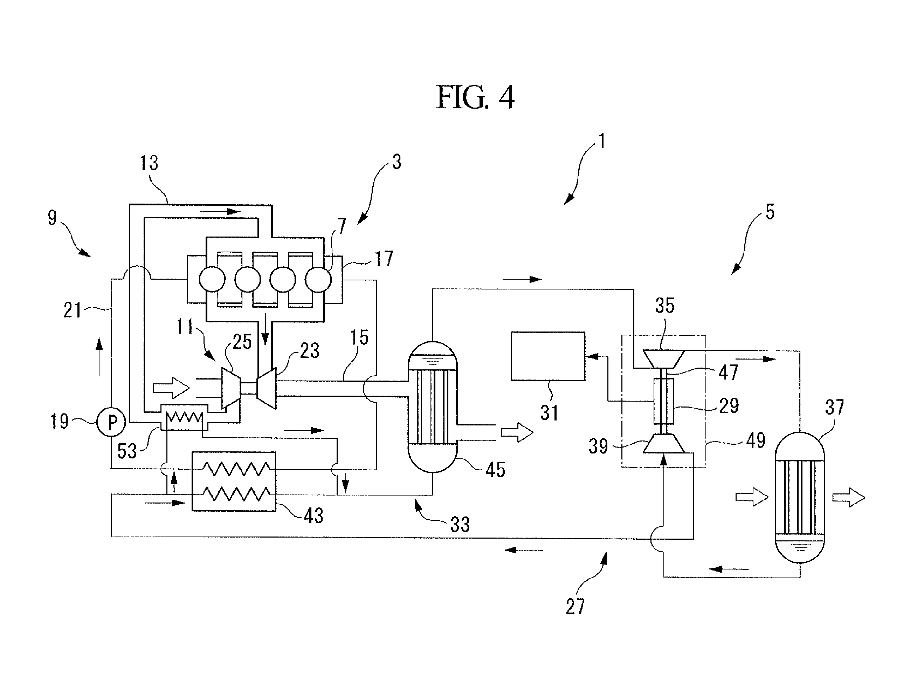

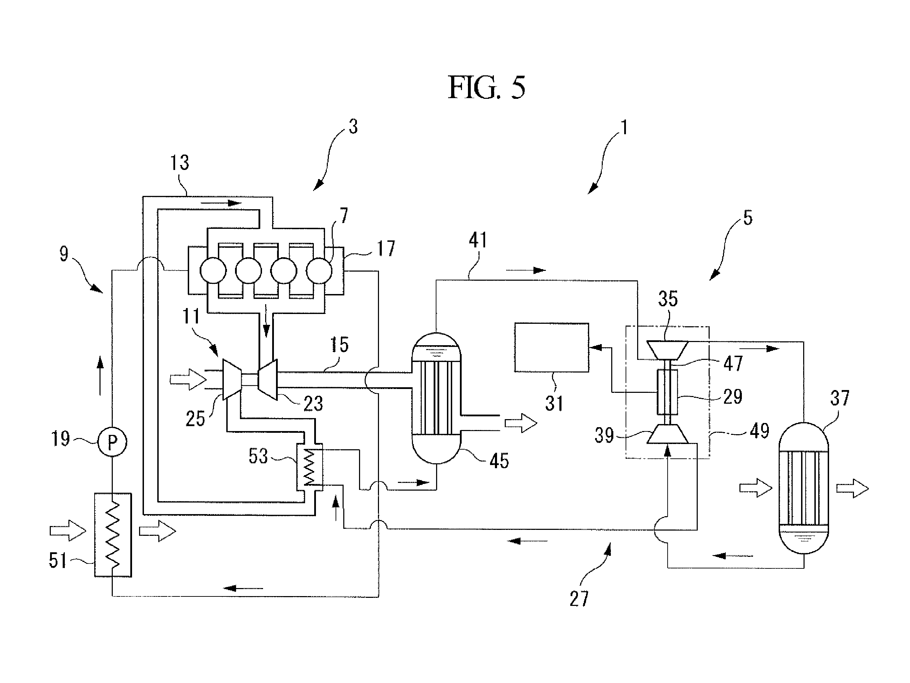

Although the intake-air heat exchanger 53 in this embodiment is connected in series at the intermediate position between the jacket-cooling-water heat exchanger 43 and the exhaust-gas heat exchanger 45, it is not limited thereto.
As shown in Fig. 4, the intake-air heat exchanger 53 may be disposed, for example, so as to be in parallel with the jacket-cooling-water heat exchanger 43.
Furthermore, as shown in Fig. 5, the intake-air heat exchanger 53 may be employed in the engine-waste-heat-recovery power generating turbo system 5 of the second embodiment. In this case, the intake-air heat exchanger 53 is connected in series to the exhaust-gas heat exchanger 45 on the upstream side thereof.

### {Fourth Embodiment}

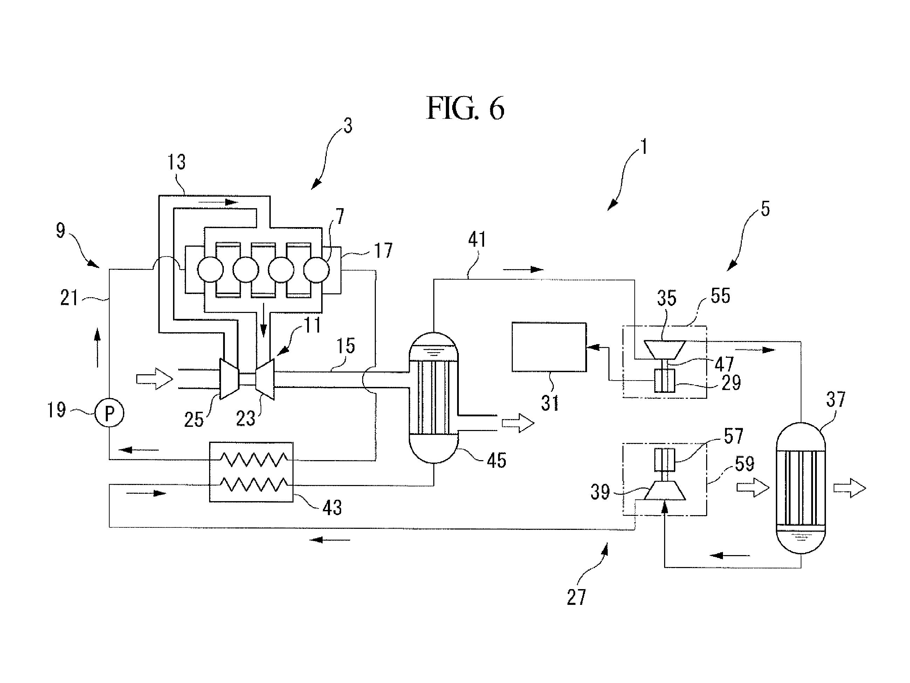

Next, a reciprocating engine system 1 according to a fourth embodiment of the present invention will be described by using Fig. 6.
Because the configurations of the turbine 35 and the turbo pump 39 in the engine-waste-heat-recovery power generating turbo system 5 of this embodiment differ from those in the first embodiment, the different portions will mainly be described herein, and redundant descriptions will be omitted for the portions that are the same as those in the first embodiment.
Note that the same members as those in the first embodiment are given the same reference signs.

Fig. 6 is a block diagram showing, in outline, the configuration of the reciprocating engine system 1 according to the fourth embodiment.
In this embodiment, the turbine 33 and the generator 29 integrated with the main shaft 47 are accommodated in a container 55, which is sealed, so as to be isolated from the external air.
The turbo pump 39 is configured to be rotationally driven by the motor 57. The motor 57 is driven by electrical power supplied from the battery 31.
The turbo pump 39 and the motor 57 are accommodated in a container 59, which is sealed, so as to be isolated from the external air.

The operation of the thus-configured reciprocating engine system 1 according to this embodiment is basically the same as that of the above-described first embodiment, redundant descriptions will be omitted, and only different portions will be described.
In the engine-waste-heat-recovery power generating turbo system 5, the low-boiling-point medium converted to the high-pressure, high-temperature gas phase at the evaporator 33 is introduced to the turbine 35 and is adiabatically expanded thereat to be in a high-temperature, low-pressure gas phase or in a wet state in which a portion thereof is in the liquid phase.
Because the turbine 35 is rotated by obtaining work through the expansion of the low-boiling-point medium, the generator 29 is rotated via the main shaft 47, thus generating power. The electrical power generated at the generator 29 charges the battery 31.

The motor 57 is rotated by the electric power supplied from the battery 31, and thus, the turbo pump 39 is rotated. The low-temperature, low-pressure liquid phase low-boiling-point medium introduced to the turbo pump 39 from the condenser 37 is pressurized by the turbo pump 39 by being compressed therein.

In this way, the turbine 35 and the generator 29 are accommodated in the container 55, the turbo pump 39 and the motor 57 are accommodated in the container 59, and thus, they are individually isolated from the external air; therefore, it is not necessary to provide a seal between the turbine 35 and the external air nor between the turbo pump 39 and the external air. Accordingly, because the low-boiling-point medium can be reliably prevented from leaking, the frequency of maintenance, such as exchanging seal parts and replenishing working fluid, can be considerably reduced, and thus, the maintenance costs can be reduced.

Because the turbo pump 39 is not connected to the main shaft 47 of the turbine 35, the turbine 35 and the turbo pump 39 can have independent rotational speeds. Accordingly, the degree of freedom can be increased for controlling the engine-waste-heat-recovery power generating turbo system 5 and the reciprocating engine system 1.
The structures around the turbine 33 and the turbo pump 39 of this embodiment may be applied to the engine-waste-heat-recovery power generating turbo systems 5 of the second embodiment and the third embodiment described above.

The present invention is not limited to the individual embodiments described above, and various modifications are possible within a scope that does not depart from the spirit of the present invention.
For example, although the turbo pump 39 is employed as a compressor, a known compressor of an appropriate type may be employed.

### {Reference Signs List}

- 1: reciprocating engine system
- 3: reciprocating engine
- 5: engine-exhaust-heat recovery power generating turbo system
- 9: jacket-cooling-water circulation system
- 11: turbocharger
- 13: intake channel
- 15: exhaust channel
- 17: jacket
- 33: evaporator
- 35: turbine
- 37: condenser
- 39: turbo pump
- 43: jacket-cooling-water heat exchanger
- 45: exhaust-gas heat exchanger
- 49: container
- 53: intake-air heat exchanger

## Claims

1. An engine-waste-heat-recovery power generating turbo system that generates power by using waste heat from a reciprocating engine which has a jacket-cooling-water circulation system for cooling inside an engine jacket and an exhaust-gas channel for exhausting high-temperature combustion gas as exhaust gas, the engine-waste-heat-recovery power generating turbo system comprising:
a medium circuit that forms a closed-loop Rankine cycle, in which low-boiling-point medium whose critical temperature is from about 80 °C to about 200 °C is used, with an evaporator that converts the low-boiling-point medium to a gas phase, a turbine that expands the low-boiling-point medium, which has been converted to the gas phase at the evaporator, to convert the low-boiling-point medium to low-pressure gas phase, a condenser that cools the low-pressure-boiling-point medium to convert the low-boiling-point medium to a liquid phase, and a compressor that pressurizes the low-boiling-point medium sent from the condenser; and
a generator that is coaxially connected to the turbine and that generates power by being rotationally driven by the turbine, which is rotated in association with an expansion of the low-boiling-point medium,
wherein the evaporator is provided with a first heat exchanger that performs heat exchange at least between the exhaust gas and the low-boiling-point medium to convert the low-boiling-point medium to the gas phase.

2. An engine-waste-heat-recovery power generating turbo system according to Claim 1, wherein the evaporator is provided with, on an upstream side of the first heat exchanger, a second heat exchanger that performs heat exchange between the low-boiling-point medium and jacket cooling water on a high-temperature side of the jacket-cooling-water circulation system to heat the low-boiling-point medium.

3. An engine-waste-heat-recovery power generating turbo system according to Claim 1 or 2, wherein
the reciprocating engine is provided with a turbocharger that compresses and supplies air; and
the evaporator is provided with, on the upstream side of the first heat exchanger, a third heat exchanger that performs heat exchange between the low-boiling-point medium and outlet air of the turbocharger to heat the low-boiling-point medium.

4. An engine-waste-heat-recovery power generating turbo system according to Claim 3, wherein the third heat exchanger is provided in series on an upstream side or a downstream side of the second heat exchanger.

5. An engine-waste-heat-recovery power generating turbo system according to Claim 3, wherein the third heat exchanger is provided in parallel with the second heat exchanger.

6. An engine-waste-heat-recovery power generating turbo system according to any one of Claims 1 to 5, wherein
the compressor is a turbo pump;
the turbo pump is coaxially connected to the generator; and
the turbine, the generator, and the turbo pump are accommodated in a sealed container.

7. A reciprocating engine system comprising:
a reciprocating engine which has a jacket-cooling-water circulation system for cooling inside an engine jacket and an exhaust gas channel for exhausting high-temperature combustion gas as exhaust gas; and
an engine-waste-heat-recovery power generating turbo system according to any one of Claims 1 to 6.
